# EUROPÄISCHE PATENTANMELDUNG

(11) **EP 1 095 700 A1**
(43) Veröffentlichungstag der Anmeldung: **02.05.2001**
(21) Anmeldenummer: 99121608.6
(22) Anmeldetag: 29.10.1999
(51) Int. Cl.: B01J 19/28, B01J 10/00

(54) **Verfahren zur Durchführung einer Mehrphasenreaktion nach dem Gegenstromprinzip einer flüssigen und gasförmigen Phase und Vorrichtung zur Durchführung des Verfahrens**

(71) Anmelder: Dr. Frische GmbH, D-63755 Alzenau (DE)
(72) Erfinder: Best, Bernd, 64546 Mörfelden/Walldorf (DE); Brunner, Karlheinz, Dr., 59302 Oelde (DE); Frische, Rainer, Dr., 60529 Frankfurt (DE); Kilian, Dirk, Dr., 63477 Maintal (DE); Seemann, Joachim, Dr., 64354 Reinheim (DE)
(74) Vertreter: Lippert, Marianne

(57) **Zusammenfassung**

Verfahren zur Durchführung einer Mehrphasenreaktion in einem kontinuierlich betriebenen, nach dem Gegenstromprinzip arbeitenden Rohrreaktor, in dem Komponenten einer flüssigen, im Rohrreaktor (1) abwärts strömenden Phase und Komponenten einer im Rohrreaktor aufwärts strömenden Gasphase im Gegenstrom der beiden Phasen zum Stoffaustausch gebracht werden, wobei die Reaktordurchsätze der flüssigen und festen Phase auf so hohe Werte vorgegeben werden, bei denen es im Rohrreaktorinneren zu einem Flüssigphasenstau kommt oder bei denen in einem Rohrreaktor ohne Staustellen (T) hervorrufende Einbauten die Fließfilmdicke der flüssigen Phase auf nicht mehr akzeptable Werte ansteigt, und diesen den Reaktorbetrieb störenden Phänomenen durch wiederholte zeitweise, vorzugsweise periodische Druckänderungen der Gasphase entgegengewirkt wird, und dabei der Druck zumindest immer dann zeitweise geändert wird, wenn ein Flüssigphasenstau oder ein nicht akzeptabler Fließfilmdickenzuwachs auftritt, und die zeitweise Druckänderung so eingestellt wird, und wobei die gestaute Flüssigphase durch eine resultierende relative Druckabnahme unterhalb der Staustelle abfließt oder die Fließfilmdicke durch eine resultierende Abnahme der Gasphasengeschwindigkeit auf einen gewünschten Wert abnimmt.

## Beschreibung

Die Erfindung betrifft ein Verfahren zur Durchführung einer Mehrphasenreaktion nach dem Gegenstromprinzip einer flüssigen und gasförmigen Phase und Vorrichtung zur Durchführung des Verfahrens.

In der Chemie stellt sich häufig die Aufgabe, Mehrphasenreaktionen in Form von Trennoperationen und insbesondere chemische Reaktionen in Mehrphasensystemen durchzuführen. Entscheidend ist hierbei die Phasentransfergeschwindigkeit der abzutrennenden bzw. zur Reaktion zu bringenden Komponenten der jeweiligen Phasen. Bekanntermaßen kann die Geschwindigkeit der Reaktion wesentlich dadurch erhöht werden, daß die in Kontakt stehenden Oberflächen der jeweiligen Phasen vergrößert werden. Diese Vergrößerung kann durch intensives Vermischen der Phasen miteinander erfolgen. Weiterhin ist bekannt, daß Mehrphasenreaktionen insbesondere bei kontinuierlicher Prozessführung im Gegenstrom besonders effizient und schnell ablaufen können. Wie weiter unten ausgeführt, treten jedoch gerade bei der Anwendung des Gegenstromprinzips häufig gravierende Probleme auf, so daß auch nach dem Gleichstromprinzip gearbeitet wird.

Ein besonderes Problem der Mehrphasenreaktion stellen Gas-Flüssig- bzw. Gas-Fest-Phasenreaktionen dar, und dies vor allem dann, wenn in einem Trägergas gelöste, gasförmige Komponenten mit in flüssigen Phasen gelösten, emulgierten oder suspendierten Komponenten zur Reaktion gebracht werden sollen. Aufgrund der äußerst hohen Unterschiede der Massendichte von Gasen auf der einen Seite und Flüssigkeiten bzw. Feststoffen auf der anderen Seite, - bei Normaldruck ergibt sich hier ein Verhältnis von ca. 1:1000 und mehr -, müssen riesige Gasvolumina mit relativ geringen gegebenenfalls feststoffhaltigen Flüssigkeitsvolumina in Kontakt gebracht werden.

Zudem werden bei der Gas-Flüssig-Mehrphasenreaktionen häufig nicht homogene Flüssigkeiten, sondern Flüssigkeitsgemische zur Reaktion gebracht. Das Strömungsverhalten derartiger Gemische ist insbesondere, wenn sie als Emulsionen vorliegen, äußerst kompliziert. So können z.B. Oberflächeneffekte zur teilweisen Spaltung der Emulsion führen. Durch unterschiedliche die Fließgeschwindigkeiten vermindernde Eigenschaften, wie z.B. Unterschiede der Viskositäten der Flüssigkeiten und/oder Unterschiede im Haftvermögen der Flüssigkeiten auf den Reaktoroberflächen können Störungen bei der Durchführung der Gas-Flüssig-Mehrphasenreaktionen bewirkt werden.

Die Komplexität von Gas-Flüssig-Mehrphasenreaktionen und des physikalisch-chemischen Verhaltens der jeweiligen Komponenten ist insbesondere bei heterogen zusammengesetzter flüssiger Phase derart hoch, daß eine Vorausberechnung deren Fließverhalten in Reaktoren praktisch nicht möglich ist. Hingewiesen sei z.B. darauf, daß selbst bei zwei nicht miteinander mischbaren flüssigen Phasen bereits zwei Typen von Emulsionen auftreten können: Phase 1 in Phase 2 und Phase 2 in Phase 1. Fließverhalten, Viskosität, Haftvermögen und andere physikalisch-chemische Eigenschaften der beiden Emulsionstypen können erhebliche Unterschiede aufweisen, so daß sich bei chemischer Reaktion das Fließverhalten der flüssigen Phase im Reaktor verändern kann. Zudem können z.B. Oberflächeneffekte zur teilweisen Spaltung der Emulsion führen.

Unter der Vielzahl der Möglichkeiten, die Effizienz und Geschwindigkeit von Reaktionen mit bzw. in Phasengemischen zu erhöhen, sei auf die Durchführung der Reaktionen durch das Versprühen von Flüssigkeiten (Lösungen, Emulsionen und Suspensionen) in das Reaktionsgas und insbesondere die Durchführung der Reaktionen in Röhrenreaktoren mit Einbauten zur Vergrößerung der Oberflächen hingewiesen.

Die Durchführung von derartigen Gas-Flüssig-Mehrphasenreaktionen in Röhrenreaktoren nach dem Gegenstromprinzip (in der Regel bei absteigend fließender Flüssigkeit (Fallfilm) und aufsteigend strömendem Gas) stellt zudem im Falle sehr großer Unterschiede im Volumenstrom der Gase und der Flüssigkeit ein erhebliches prinzipielles Problem dar. Die der Flüssigkeit entgegenströmenden Gasmengen verringern durch Reibungskräfte die Ablaufgeschwindigkeit der Flüssigkeiten. Dadurch kann es insbesondere bei Reaktoren mit Einbauten dazu kommen, daß im Reaktor eine sich selbst aufbauende Ablaufsperre für die Flüssigkeiten entsteht, welche den störungsfreien Betrieb des Reaktors verhindert (Der Reaktor "säuft ab").

Aus den genannten Gründen wird häufig ein im Gleichstrom betriebener Reaktor eingesetzt. Bei der Reaktionsführung im Gleichstrom fließen die gasförmige Phase (Trägergas und gasförmige reaktive Komponente) und die flüssige Phase in gleicher Richtung. Bei stöchiometrischem Einsatz der Reaktanten muß man in der Regel wegen des großen Dichteunterschiedes einen sehr viel höheren Volumenstrom für das Gas im Vergleich zu der Flüssigkeit und somit eine wesentlich höhere Strömungsgeschwindigkeit des Gases vorgeben. Durch die Reibungskräfte an der Grenzfläche zwischen Gas und Flüssigkeit wird die Strömungsgeschwindigkeit der flüssigen Phase erhöht. Dies ermöglicht, daß selbst solche den Strömungswiderstand erhöhende und damit die Fließgeschwindigkeit verringernde und die Oberflächen vergrößernde Reaktoreinbauten verwendet werden können, die im Gegenstrom nicht durchströmt würden.

Der Nachteil der Gleichstromprinzipanwendung ist jedoch, daß die Verweilzeit des Gases und damit der gasförmigen Reaktanten im Reaktor aufgrund der hohen Strömungsgeschwindigkeit relativ kurz ist. Darüber hinaus liegt bei Gleichstromreaktoren grundsätzlich eine ungünstige Temperatur- und Konzentrationsverteilung der Reaktanten über die Länge des Reaktors vor. Im Eintritt in den Reaktor haben sowohl die Flüssig- als auch die Gasphase bezüglich der Reaktanten hohe Konzentrationen, im Ablauf jedoch in beiden Phasen sehr niedrige Konzentrationen. Daraus ergeben sich z.B. bei exothermen Reaktionen eine hohe Wärmeentwicklung und damit ein hoher Stoffumsatz bei Eintritt der Komponenten in den Reaktor und bei Austritt eine geringe Wärmeentwicklung und damit ein geringer Umsatz. Um dennoch einen vollständigen Umsatz zu erzielen, werden z.B. mehrere Gleichstromreaktoren im Kreuzstrom geschaltet, um sich dem Gegenstromprinzip zu nähern.

Bei einem tatsächlich im Gegenstrom geführten Prozeß ist hingegen prinzipbedingt der Umsatz an Produkt über die Reaktorlänge gleichmäßig verteilt. Ein vollständiger Umsatz der Reaktanten ist bei dieser Art der Prozeßführung sehr viel einfacher realisierbar. Ebenso ist die Prozeßkontrolle auch bei exothermen Reaktionen wesentlich einfacher durchführbar. Ein Beispiel für eine seit langem bekannte und industriell großtechnisch durchgeführte Gas-Flüssig-Mehrphasenreaktionen, bei dem sich die oben dargelegten Probleme stellen, sind die Ozonolyse von ungesättigten organischen Verbindungen mit Ozon in Sauerstoff oder Luft und die anschließende oxidative Spaltung der bei der Ozonolyse entstehenden Ozonide mit Sauerstoff oder Luft. Die industriell sicherlich bedeutendste Ozonolyse findet Anwendung bei der oxidativen Spaltung der Ölsäure mittels Ozon und Sauerstoff. Hierbei wird Ölsäure in Anwesenheit von Pelargonsäure und Wasser mit einem Ozon-/Sauerstoff-Gemisch bzw. Ozon-Luft-Gemisch zunächst zum Ölsäureozonid in einer Reaktionssäule gegebenenfalls mit entsprechenden Einbauten umgesetzt und anschließend das entstandene Ozonid in einem zweiten Reaktor in die entsprechenden Carbonsäuren gespalten bzw. weiteroxidiert.

Obwohl das chemische Prinzip der Reaktion sehr einfach und lange bekannt ist, ist aus den bereits genannten Gründen deren technische Durchführung anspruchsvoll. Es handelt sich um ein System, bei dem zwei nicht miteinander mischbare Flüssigkeiten, Wasser und organische Säure, mit Sauerstoff als Gas bei sehr großen Unterschieden bezüglich des Strömungsvolumens von Gas und Flüssigkeiten umzusetzen sind. Das entstehende Ölsäureozonid hat grundlegend andere physikalisch-chemische Eigenschaften (beispielsweise bezüglich Haftungsvermögen, Viskosität, Löslichkeit, Polarität, Schmelzpunktes, Emulgiereigenschaften) als die Ölsäure. Unter anderem aus diesem Grund wird bei der technischen Ozonolyse der Ölsäure eine nicht reagierende zweite Fettsäure, die Pelargonsäure, zugesetzt. Die Pelargonsäure dient zudem nach der Reaktion der Ölsäure zum Ozonid dem Ozonid als Lösemittel. Um die Reaktionswärme abführen zu können, wird ferner Wasser zugesetzt. Die Reaktion wird so geführt, daß die Wärmetönung der Reaktion zum einen durch die Wärmekapazität der Reaktionslösung einschließlich des Wassers und zum anderen vor allem durch die Verdampfungsenergie aufgenommen wird, die dem Reaktionsgemisch bei der Verdunstung der flüssigen Phase und speziell des Wassers bis zur Dampfsättigung des durchströmenden, zunächst trockenen Gases entzogen wird.

Diese Gründe führten dazu, daß für die Ozonolyse der Ölsäure die besagte Kreuzstrom-Reaktoranordnung mit mehreren im Gleichstrom betriebenen Röhrenreaktoren entwickelt wurde. Wird die Ozonolyse in einem nach dem Gegenstrom arbeitenden Reaktor durchgeführt, so wird dieser mit geringen Strömungsgeschwindigkeiten der Phasen gefahren und hat daher zur Erzielung eines nennenswerten Stoffumsatzes ein entsprechend großes Reaktorvolumen bzw. große Reaktorabmessungen.

Der Erfindung liegt die Aufgabe zugrunde, ausgehend von den Merkmalen im Oberbegriff des Anspruchs 1 bzw. 3 ein Verfahren zu schaffen, das eine verbesserte Durchführung von Mehrphasenreaktionen nach dem Gegenstromprinzip auch bei kritischen Phasenzusammensetzungen ermöglicht. Ferner soll eine Vorrichtung zur Durchführung des Verfahrens geschaffen werden. Diese Aufgabe wird durch den Gegenstand der unabhängigen Ansprüche 1 und 3 bzw. 10 gelöst. Vorteilhafte Weiterbildungen sind in den Unteransprüchen definiert.

So stellten die Erfinder überraschend fest, daß sie den kontinuierlich im Gegenstrom arbeitenden Rohrreaktor durchaus fortgesetzt mit derart hohen Gasphasendrücken und folglich auch Gasphasenströmungsgeschwindigkeiten sowie Flüssigphasengeschwindigkeiten betreiben konnten, daß es bereits nach wenigen Minuten in einem Reaktor mit Einbauten zu einem Flüssigphasenstau kam. Allein durch eine wiederholte zeitweise Druckabsenkung gelingt es, die nach der Druckerhöhung immer wieder auftretenden Staustellen zu beseitigen, und dennoch einen insgesamt stabilen Reaktorbetrieb mit hervorragendem Reaktionsergebnis und Durchsätzen zu erzielen, wie sie sonst nur bei Gleichstromreaktoren z.B. mit sehr viel größerem Querschnitt und längeren Reaktionszeiten erzielbar sind (Die Reaktorsäule kann trotz partiellen "Absaufens" kontinuierlich betrieben werden).

In einem Reaktor ohne Staustellen hervorrufende Einbauten konnte durch dieselbe Maßnahme ein wiederholtes Anwachsen des Fließfilms der Flüssigphase auf der Rohrwand in den Bereich für die Reaktion nicht akzeptabler und sogar kritischer Werte bewältigt werden (bei denen es im Grenzfall zum Einbrechen des Fließfilms im Reaktorrohr kommt). Dabei stellt sich darüber hinaus der Vorteil ein, daß durch die wiederholte Zu- und Abnahme der Fließfilmdicke eine Vergrößerung der Fließfilmoberfläche und damit Reaktionsfläche über die Rohrlänge auftritt. Die Fließfilmoberfläche nimmt ein wellenförmiges Profil an, wobei die Flüssigphase im Fließfilm vorteilhaft in sich verschoben wird und so unterschiedliche Flüssigphasenbereiche im Filmprofil mit der Gasphase in Berührung kommen. Durch die stets erneute Erhöhung des Gasphasendrucks wird im übrigen auch eine Abnahme des Fließfilms auf zu geringe Werte verhindert.

Ferner konnte in beiden im Anspruch 1 aufgezeigten Fällen eine weitere Steigerung des Umsatzes der Reaktion dadurch erzielt werden, daß der Gasphasendruck nicht nur wiederholt zeitweise abgesenkt wurde, sondern periodisch so erhöht und abgesenkt wurde, daß im Rohrreaktor durch den derart gepulsten Gasdruck eine Gasschwingung auftrat. Durch die erzeugte Gasschwingung mit einer zeitweisen Bewegung der Gasphase entgegen der an sich gewünschten Gegenstromrichtung wird überraschender Weise der stabile, kontinuierliche Betrieb des Reaktors nicht gestört, sondern hingegen die Reaktionsumsetzung gefördert. Ein Grund hierfür mag sein, daß die Gasphase durch ihre Hubbewegung über längere Kontaktzeiten und vergrößerte Phasenaustauschflächen mit der Flüssigphase in Reaktion kommen kann. Die Flüssigphase wird zudem ebenfalls durch die durch den periodischen Gashub erzeugten Turbulenzen in vorteilhafter Weise durchmischt. Dies führt zu einer Erhöhung des Stoffumsatzpotentials pro Reaktionsvolumen. Darüber hinaus werden selbst bei feinmaschigsten Stukturen von der Flüssigkeit zugesetzte Bereiche durch die Gasschwingung wieder freigemacht. Daher können erfindungsgemäß im Gegenstromreaktor praktisch beliebig dicht gepackte feinmaschige Strukturen und andere sonst zu vermeidende potentielle Staustufen eingesetzt werden.

Ein besonderer Vorteil besteht darin, daß mit sehr hoher Gasstömungsgeschwindigkeit gearbeitet werden kann, was für stöchiometrische Verhältnisse erfordernde chemische Reaktionen wie die zweistufige oxidative Ozonolyse von ungesättigten Fettsäuren von entscheidendem Vorteil ist. Es kann wegen der verbesserten Umsetzungsrate auch bei hohem Mengendurchsatz mit sehr hohen Ozonkonzentrationen gearbeitet werden. Der Wasserzusatz kann ohne enge Begrenzung durch die übrigen Bestandteile der flüssigen Phase in weiten Grenzen gesteigert werden.

Selbst wenn man die dem im Gegenstrom betriebenen Rohrreaktor zugeführten Stoffströme so gering hält, daß es nicht zu einem Flüssigphasenstau kommt, ist es durch die Schwingungserzeugung in der Gasphase gemäß Anspruch 3 möglich, den Reaktionsumsatz gegenüber der Nichtanwendung dieses Merkmals deutlich zu steigern und in den Genuß der aufgezeigten Vorteile wie dem Arbeiten mit hoher Ozonkonzentration usw. zu kommen. Im Leerrohrreaktor erhält man die erläuterte vorteilhafte Oberflächenvergrößerung und Schichtverlagerung des Fließfilms und im mit Einbauten usw. gefüllten Reaktor die hierfür bereits geschilderten Vorteile. Auch hier können somit im Vergleich zur klassisch durchgeführten Gegenstromreaktion ein deutlich höherer Stoffdurchsatz bei gegebener Reaktorgeometrie und eine wesentliche Vergrößerung der Grenzfläche zwischen Flüssigkeit und Gasphase und damit eine deutliche Erhöhung des Grenzflächenübertritts der gasförmigen Reaktionskomponente erreicht werden. Emulsionen innerhalb der flüssigen Phase bzw. während der Reaktion entstehende Emulsionen lassen sich wesentlich effektiver umsetzen als ohne Gasschwingung. Darüber hinaus sind auch bei dieser Art des erfindungsgemäßen Verfahrens die sonst ein erhebliches Problem darstellenden Totvolumina bezüglich des Stoffstromes in der Reaktionssäule vermeidbar, wie sie speziell bei Suspensionen von Nachteil sind.

Die erfindungsgemäß angewandte Schwingung der Gasphase ist im übrigen auch vorteilhaft auf im Gleichstrom betriebene Reaktoren und im Kreuzstrom geschaltete Gleichstromreaktoren anwendbar. Spezielle Vorteile kann sie hier bei der Umsetzung von zur Sedimentation neigenden Suspensionen wie z.B. im Fall katalytischer Hydrierungen mit Ranay-Nickel als Katalysator und Wasserstoff als Gas erbringen.

Wie weiter unten an einem Beispiel erläutert, ist es erfindungsgemäß möglich, daß der Stoffstrom der flüssigen Phase im Gegenstromreaktor über den Zeitraum der Reaktion integriert bezüglich der durchfließenden Menge der Charakteristik einer im Gleichstrom geführten Reaktion entspricht, jedoch bezüglich der Phasentransferphänomene und dem Verlauf der chemischen Reaktion die Charakteristik einer im Gegenstrom geführten Reaktion aufweist.

Die erfindungsgemäße Durchführung der im Gegenstrom geführten Gas-Flüssig-Mehrphasenreaktion gemäß Anspruch 1 bzw. 5 gestattet zudem, in Teilbereichen der Reaktorsäule die Vorteile einer Gegenstromreaktion zu nutzen, die charakteristisch für Blasensäulenreaktoren sind.

Die periodischen Schwingungen des im Gegenstrom geführten Gases gemäß Anspruch 2 und 3 induzieren auch in der flüssigen Phase und gegenüber dem Gas selbst eine wesentlich höhere Vermischung als bei gleicher Gegenstromprozeßführung ohne periodische Schwingung. Die Einführung einer periodischen Schwingung wird bisher zwar auch schon bei Flüssig-Flüssig-Gegenstromperkolatoren genutzt. Im Unterschied zu Gas-Flüssig-Mehrphasenreaktionen schwingen hier jedoch zwangsläufig beide Phasen im Gleichtakt und die Strömungsverhältnisse sind prinzipiell nicht vergleichbar.

Im Vergleich zu den Kreuzstromanordnungen mit zumindest zwei im Kreuzstrom geschalteten Gleichstromreaktoren kann der nur eine erfindungsgemäße Gegenstrom-Rohrreaktor verkürzt sein und erbringt dennoch einen besseren Umsatz. Im Vergleich zu herkömmlich betriebenen Gegenstromrohrreaktoren kann der erfindungsgemäße Reaktor bei gleichem Durchsatz und Stoffumsatz erheblich schmaler ausgebildet werden.

Zur Durchführung der erfindungsgemäßen im Gegenstrom geführten Gasflüssigreaktion werden bevorzugt zylindrische Röhrenreaktoren eingesetzt, weil auf deren Geometrie das Erfindungsprinzip auf einfache Weise angewandt und optimiert werden kann. Das Erfindungsprinzip nach Anspruch 1 oder 3 kann sowohl auf Röhrenreaktoren ohne den Strömungswiderstand erhöhende Einbauten (Dünnfilm-/Glattrohr-Röhrenreaktoren), als auch auf Röhrenreaktoren mit Einbauten angewandt werden, die die Reaktionsgrenzflächen und damit auch den Strömungswiderstand erhöhen und somit die erfindungsgemäßen Gasschwingungen dämpfen. Hierbei können sowohl einheitliche gepackte Säulen als auch variabel geschichtete, unterschiedliche Strömungswiderstände und unterschiedliche Strömungen der Phasen induzierende Zonen in den Einbauten vorhanden sein. Gerade bei letzteren kommen die Vorteile des erfindungsgemäßen Gegenstromprinzips besonders zur Wirkung.

Sämtliche dem Fachmann bekannten Eigenschaften wie katalytische Aktivität oder Polarität der Oberflächen, Elektrostatik, Transportphänomene, elektronische Effekte, magnetische Effekte, Feldeffekte der verwendeten Oberflächen, die bei den Einbauten zur Vergrößerung der Oberflächen zum Einsatz kommen, sind im erfindungsgemäßen Verfahren anwendbar. Diese Einbauten können beispielsweise massiv sein oder als Coatings aufgebracht sein.

Die Amplitude und Frequenz der wiederholten Druckänderungen der Amplitude sowie der induzierten Druckschwingungen kann der Fachmann seiner jeweiligen Reaktorgeometrie und den Stoffeigenschaften (insbesondere den Viskositäten) seines Systems anpassen. Für die Charakteristik der Schwingung kommen symmetrische oder asymmetrische, sinusiodale, Dreieck-, Sägezahn-, Rechteck-, Treppen-, kombinierte und/oder überlagerte Schwingungsmuster mit mehreren Frequenzen und Charakteristiken, überlagerte Schwingungen beispielsweise zur Erzeugung von gezieltem Flüssigfilmabriss in Frage.

Die in der erfindungsgemäßen Vorrichtung zu ergreifenden Maßnahmen zur Umsetzung des erfindungsgemäßen Verfahrens sind gegenüber den herkömmlichen Gegenstromreaktoren mit geringem technischen Zusatzaufwand realisierbar. Es reicht prinzipiell eine einzige Druckänderungseinrichtung in Form eines Kolbens oder einer Membran im Bereich der Gasphasenzufuhr am unteren Reaktorende aus. Auch können zusätzliche Gasdruckänderungseinrichtungen längs des Rohrreaktors und auch im oberen Bereich des Reaktors sowie z.B. im Bereich von Drosseln vorgesehen sein, die erfindungsgemäß gezielt eingesetzt werden. Eine gestaute Flüssigphasensäule kann auch mit Hilfe eines Bypasses mit Ventil abgelassen werden, wobei beim Öffnen des Ventils ein Druckausgleich der Gasphase ober und unterhalb der Staustelle herbeigeführt wird und die Flüssigkeit schnell abfließt. Schließlich ist es auch möglich, den Druck oberhalb der Staustellen gegenüber dem Gasphasendruck unterhalb der Staustelle zu erhöhen, um die gestaute Säule abzubauen.

Im folgenden wird das erfindungsgemäße Verfahrensprinzip am Beispiel der Umsetzung von ungesättigten nativen Fettsäuren zu Ozoniden examplarisch erläutert. Dieser Fall steht für Gas-Flüssig-Gegenstromreaktionen, bei denen ein Trägergas ein gasförmige Reaktante enthält und mit einer in Flüssigkeit gelösten Reaktante in Gegenwart einer zweiten als Hilfsstoff eingesetzten, nicht mischbaren Flüssigkeit zur Umsetzung gebracht werden soll.

Es ist jedoch auch auf andere chemische Reaktionen und insbesondere für die bezeichneten kritischen gemischten Phasen mit gleichem Vorteil anwendbar. Als Mehrphasenreaktionen kommen auch Trennoperationen in Frage wie die Entfernung von Ammoniak oder SO₂ aus Rauchgas als Gasphase mit Wasser oder einer Säure als flüssiger Phase.

Ungesättigte native Fettsäuren (z.B. Ölsäure, Erucasäure, ... etc.) lassen sich mit Ozon zu den entsprechenden Ozoniden umsetzen. Das Ozon wird bei dieser Reaktion in Siemens- Generatoren aus Sauerstoff oder Luft erzeugt und als Gasgemisch mit den ungesättigten Fettsäuren zur Reaktion gebracht. Die Konzentration des Ozons liegt dabei je nach Prozeßführung bei wenigen Prozent bis maximal 15%.

Die zur Reaktion zu bringenden flüssigen (z.B. Ölsäure) oder festen (z.B. Erucasäure), ungesättigten Fettsäuren werden in einem an der Reaktion nicht teilnehmenden Lösemittel (z.B. Pelargonsäure) gelöst und mit Wasser als Reaktionswärme aufnehmendem und abführendem Medium vermischt. Dieser flüssigen Phase strömt im Gegenstrom das Gasgemisch aus Ozon und Sauerstoff bzw. Luft im Röhrenreaktor entgegen. Das Verhältnis von Ozon zu ungesättigter Fettsäure wird dabei so gewählt, daß sowohl eine stöchiometrische Umsetzung zwischen Ozon und Doppelbindung der Fettsäure stattfinden kann, als auch zwangsweise die von Temperatur, Luft, Verweilzeit und anderen physikalisch-chemischen Parametern (z.B. katalytische Aktivität oder Polarität der freien Oberflächen,... etc.) abhängige Zerfallsrate des Ozons kompensiert wird ("O₃-Überschuß").

Die zugeführte Wassermenge, die Temperatur des zugeführten Wassers sowie der Volumenstrom des im Gegenstrom zugeführten Gases und dessen Temperatur werden so gewählt, daß die Temperatur des Reaktors im gewünschten Temperaturbereich konstant bleibt. Das Wasser nimmt zum einen aufgrund seiner Wärmekapazität ein Teil der Wärme auf und führt zum anderen durch das im Gegenstrom fließende Gas, welches beim Eintritt in die Säule zunächst kühl und trocken ist, die durch Verdampfung des Wassers zur Wasserdampfsättigung des Gases nötige Energie ab.

Von der bei dieser Reaktion genutzten Eigenschaft des Hilfsstoffes Wasser, die Temperatur des Reaktors und der Reaktion thermodynamisch kontrolliert regeln zu können, wird in der Produktionstechnik seit langem bereits Gebrauch gemacht, jedoch sind bei der Durchführung einer Gegenstromreaktion bisher den veränderbaren Parametern enge Grenzen gesetzt. Mit zunehmender Strömungsgeschwindigkeit des im Gegenstrom fließenden Gases (Luft bzw. Sauerstoff mit Ozon) wie auch durch dichtere Packung der Reaktorsäulen zur Verbesserung des Phasenaustausches zwischen dem Gas und der flüssigen Phase wird die Strömungsgeschwindigkeit der flüssigen Phase sehr bald derart reduziert, daß diese sich im Reaktionsrohr staut bzw. ihre Fließrichtung umkehrt.

Läßt man nun das Ozon-Sauerstoff-Gemisch gemäß Anspruch 3 im Gegenstrom pulsieren, ändert man also stetig den Eintrittsdruck des im Gegenstrom geführten Gases und somit dessen Strömungsgeschwindigkeit, so wird zwar auch hier die flüssige Phase durch das entgegenströmende Gas abgebremst und im Durchfluß vermindert. Bei über die Zeit gesehen gleicher Gasmenge (Fracht in Gasgewicht pro Zeiteinheit) ist jedoch diese durchflußmindemde Wirkung deutlich niedriger als bei gleichmäßigem Gasstrom.

Die wiederholten (gemäß Anspruch 1) oder periodischen Druckänderungen (gemäß Anspruch 3 bzw. 2) in der Gasphase und damit die Änderungen der Strömungsgeschwindigkeit des Gases induzieren bei der flüssigen Phase einen Auf- und Abbau der Dicke des Fließfilmes im Reaktorrohr. Ohne die Fließrichtung umzukehren, ist der durch den Gasgegenstrom induzierte Dickenzuwachs des Fließfilmes auf einen maximalen Wert beschränkt, der sich aus dem Zufluß an Flüssigkeit in den Reaktor ergibt. Die Geschwindigkeit, mit der der aufgebaute Fließfilm abnehmen kann, hängt hauptsächlich von der inneren Reibung der flüssigen Phase (Viskosität) sowie der Reibungskraft zwischen dem Gas und der flüssigen Phase ab. Bei wechselnder Geschwindigkeit des entgegenströmenden Gasgegenstromes lassen sich die ablaufenden Prozesse in zwei Zeit-Phasen einteilen: In der einen Zeit-Phase baut sich bei erhöhter Gegenstromgeschwindigkeit des Gases infolge des Reibungswiderstandes mit der Oberfläche der flüssigen Phase, dem Zustrom der flüssigen Phase entsprechend, langsam eine sich mehr und mehr erhöhende Filmdicke auf. Diese kann dann in der anderen Zeit-Phase bei verminderter Gegenstromgeschwindigkeit des Gases schnell in Fließrichtung der flüssigen Phase abgebaut werden kann. Dabei verbleibt resultierend die in Fließrichtung der flüssigen Phase wirkende Förderkraft.

Besonders vorteilhaft läßt sich das erfindungsgemäße Prinzip der Gegenstromreaktion in solchen Reaktoren anwenden, in denen eine oder mehrere Zonen besonders hohen Strömungswiderstandes, sogenannte Drosseln, eingebaut sind. Drosseln können z.B. quer zur Strömungsrichtung eingebaute Lochscheiben mit gleichen oder unterschiedlichen Durchmessern und Formen der Löcher bzw. Durchtritte sein. Wird in einen Reaktor, der durchgehend mit Einbauten (z.B. Füllkörpern oder Geflechten) gefüllt ist, in wiederholten Abständen eine solche die Strömung behindernde Drossel eingebaut, so kann ein derartiger Reaktor im Gegenstrom mit wiederholt abgesenktem Gasdruck bzw. pulsierender Gassäule bezüglich des Flüssigkeitsstroms in etwa die Charakteristik eines Gleichstromreaktors und bezüglich der Phasendurchmischung von Gas und Flüssigkeit und damit des Phasentransfers bzw. Stoffumsatzgeschwindigkeit die Charakteristik eines im Gegenstrom geführten Reaktors sowie auch eines Gegenstrom-Blasensäulenreaktors erhalten.

Betrachtet man die Umgebung einer in den Reaktor eingebrachten Drossel, z. B. eine Lochscheibe, so sind sowohl oberhalb der Lochscheibe als auch unterhalb der Lochscheibe deutlich niedrigere Strömungswiderstände für Gas und Flüssigkeit als beim Duchgang durch die Drossel vorhanden. Da hierbei sowohl die flüssige Phase als auch die Gasphase die Drossel im Gegenstrom durchströmen müssen, kann während des kontinuierlichen Betriebes mit Flüssigkeitszugabe von oben der Druck unterhalb der Drossel so ansteigen, daß der Durchfluß der flüssigen Phase durch die Drossel unterbleibt. Somit staut sich die flüssige Phase vor der Drossel aufgrund der stetig zufließenden Menge an neuer Flüssigkeit zu einer Flüssigkeitssäule auf, durch die das entgegen strömende Gas gleichzeitig hindurchperlt. Die Gasphase oberhalb dieser Flüssigkeitssäule hat dabei einen deutlich niedrigeren Druck als die Gasphase unterhalb der Drossel. Dieser Druckunterschied entspricht mindestens dem Druck der Flüssigkeitssäule, andernfalls würde nur die Flüssigkeit die Drossel durchströmen. Wird nun pulsierend der Gasdruck unterhalb der Drossel auf das Niveau des Gasdruckes oberhalb der über der Drossel gestauten Flüssigkeitssäule gesenkt, so fließt die Flüssigkeit durch die Drossel und versperrt dem Gas den Weg. Da unterhalb der Drossel für die Flüssigkeit ein deutlich geringerer Strömungswiderstand als beim Durchströmen der Drossel entgegengesetzt wird, fließt die flüssige Phase schnell ab. Sobald die Flüssigkeitssäule oberhalb der Drossel abgeflossen ist, findet in den Gasräumen oberhalb und unterhalb der Drossel schlagartig ein Druckausgleich statt. Nimmt nun der Druck unterhalb der Drossel entsprechend dem erfindungsgemäßen Gegenstromprinzip wieder zu, so vermindert sich der Durchfluß an flüssiger Phase bei gleichzeitig steigendem Durchsatz an Gasphase bis wiederum eine von Gas durchperlte Flüssigkeitssäule oberhalb der Drossel entsteht, die dann in der Schwingungsphase geringeren Gasdrucks die Drossel durchströmt. Die zeitweise Ausbildung der partiellen Flüssigkeitssäulen ist für den Wirkungsgrad der Reaktion somit keinesfalls schädlich. Es kann sogar von Vorteil sein, wenn lokal im Reaktor kleinere Flüssigkeitssäulen aufgebaut werden und durch eine periodische Druckänderung auf einem vorgegebenen Niveau gehalten werden und nicht vollständig abgebaut werden.

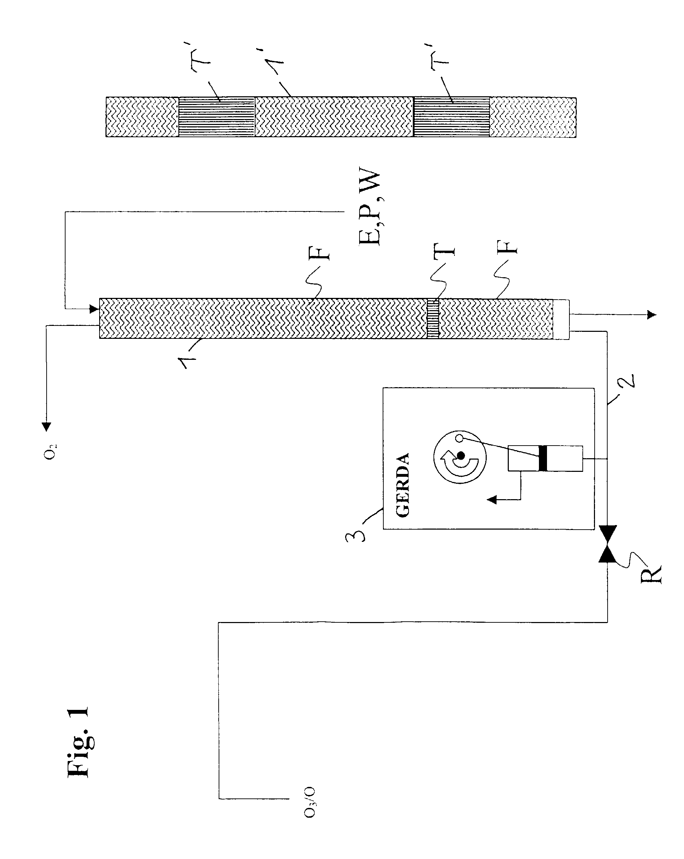

Im folgenden wird die Erfindung anhand der FIGUR 1 weiter erläutert, die in schematischer Weise ein Ausführungsbeispiel der erfindungsgemäßen Vorrichtung zeigt.

### Umsetzung von ungesättigten nativen Fettsäuren zu Ozoniden.

Zur Umsetzung von ungesättigten nativen Fettsäuren zu Ozoniden wurde eine Laboranlage bestehend aus folgenden Elementen aufgebaut.

Eine Reaktorsäule 1 (Typ I) einer Länge von 1,20 m und mit einem Innendurchmesser von nur 0,040m aus Glasbauteilen der Firma Büchi AG/ Schweiz, ist mit handelsüblichen Füllkörpern F der Firma Vereinigte Füllkörper Fabriken gefüllt, welche durch eine 2mm Teflonplatte T mit fünf 5mm-Bohrungen abgeteilt sind.

Am Kopf der Säule sind zwei nicht näher bezeichnete Stutzen zu Zufuhr von Flüssigkeit (E, P,W) und zum Gasaustrag (0₂) angebracht. Unterhalb der Packung befindet sich ein T-Stück 2 aus Glas, an welchem seitlich ein Gaseinlaß zur Gasquelle (0₃/0₂) über ein Rückschlagventil R angebracht ist. Nach unten hin ist an diesem T-Stück 2 ein nicht dargestelltes Ventil zum kontrollierten Ablassen der Flüssigkeit montiert.

Die Flüssigkeitszufuhr erfolgt über eine nicht dargestellte Dosierpumpe der Firma ProMinent/Heidelberg, die die Flüssigkeit aus einem temperierbaren Vorratsbehälter zieht, der diese unter stetigem Rühren homogenisiert bzw. homogen erhält.

Die Gaszufuhr besteht aus einem ebenfalls nicht dargestellten Siemensgenerator zur Ozonerzeugung der Firma Wedeco/Herford, der hier mit reinem Sauerstoff betrieben wurde. Bei einem Gasdurchfluß von 400 l/h und einer eingestellten Generator-Leistung von 500 Watt entsteht ein Ozon/Sauerstoffgemisch mit ca. 11 Vol.-% Ozon. Dabei wird ein Gasgemisch mit ca. 54g Ozon je Stunde erzeugt. Das Ozon/Sauerstoff-Gemisch wird über ein Rückschlagventil von unten in die Reaktorsäule F eingeführt. Zwischen dem Rückschlagventil R und Reaktor ist über die T-Verzweigung 2 eine Gerät zur Erzeugung von Druckänderungen im Gasstrom 3 (GERDA) angeschlossen. Im einfachsten Fall ist dies als Ausdehnungsgefäß realisierbar, dessen Volumen mechanisch variiert werden kann. Im Ausführungsbeispiel ist nach anfänglichen Versuchen mit einem solchen Gefäß ein Kolben eingebaut worden.

Ein flüssiges Gemisch aus Erucasäure (E), Pelargonsäure (P) und Wasser (W) der Zusammensetzung:

| | | |
|---|---|---|
| Erucasäure (94%), | C₂₀H₄₀O₂ | 12.5 Gew.-% |
| Pelargonsäure, | C₉H₁₈O₂ | 12.5 Gew.-% |
| Wasser, | H₂O | 75.0 Gew.-% |

wird unter stetigem Rühren im nicht dargestellten Mischgefäß vorgelegt.

Dieses Flüssigkeitsgemisch wird mittels der Dosierpumpe von oben auf die gepackte Reaktorsäule (des Typs I) gegeben. Im Gegenstrom wird unterhalb der Packung, wie dargestellt, ein Ozon/Sauerstoffgemisch eingespeist. Dabei reagiert das Ozon mit der in Pelargonsäure gelösten Erucasäure unter Wärmeabgabe zu einen Erucasäureozonid. Das Ozon reagiert mit Wasser und der Pelargonsäure nicht oder nur in verschwindend geringem Maße. Jedoch zerfällt ein Teil des Ozons (ca. 20%) zwischen Erzeugung und Reaktoraustritt.

Die Stoffströme der gelösten Erucasäure und des Ozons und die der jeweiligen Begleitstoffe (Pelargonsäure, Wasser, Sauerstoff) werden so eingestellt, daß ein stöchiometrischer Umsatz von Erucasäure und Ozon zu Erucasäureozonid stattfinden kann. Der Anteil des zerfallenden Ozons wird im Überschuß eingesetzt und somit der für die Reaktion nicht zur Verfügung stehende Ozonanteil kompensiert.

Zu Beginn des Betriebes bleibt das Gerät 3 ausgeschaltet. Bei einer Förderleistung von 2600 g/h Flüssigkeitsgemisch (E,P,W) und einem Volumenstrom von 400 l/h Gasgemisch (Ozon/Sauerstoff) im Gegenstrom baut sich nach einiger Zeit (ca. 5 Minuten), nachdem die Ozonanlagerungsreaktion in Gang gekommen ist, am Tefloneinsatz T eine Ablaufsperre aus dem zugeführten Flüssigkeitsgemisch auf. Deren Pegel steigt immer weiter an und führt zu einem kritischen Zustand, bei dem der Betrieb dieses Reaktors unmöglich wird. Der Reaktor füllt sich mit Flüssigkeit, die nicht ablaufen kann, da mehr Flüssigkeit von oben zugeführt wird, als durch die Teflonscheibe abfließen kann. Dieses Abflußproblem begrenzt den Durchsatz für diese Reaktorgröße und Bauart bei herkömmlichem Betrieb. Sobald sich aufgrund der hohen Stoffströme eine solche flüssige Ablaufsperre aufbaut und sich die Möglichkeit des Auftretens eines kritischen Zustandes abzeichnet, wird das Gerät 3 eingeschaltet. Der Reaktor läßt nun einen höheren Produktdurchfluß zu. Durch gepulste Druckänderungen und somit Änderungen der Strömungsgeschwindigkeit des Gases baut sich die flüssige Ablaufsperre zyklisch auf und wieder ab und ermöglicht so einen Betrieb dieses Reaktors mit den genannten hohen Stoffeinsätzen. Der Stoffumsatz zum Ozonid war hierbei nahezu vollständig (>98%).

Selbst beim Herunterfahren der Flüssigkeits-Dosierpumpe auf niedrigste Leistung von weniger als 1000 g/h und entsprechender Reduzierung des Gasstromes auf weniger als 200 l/h konnte noch kein kontinuierlicher Reaktorbetrieb erreicht werden. Nach wie vor baute sich eine Flüssigkeitssperre auf. Eine Probe der Reaktionslösung am Ausgang zeigte zudem keine vollständige Umsetzung. Erst bei drastischer Absenkung auf noch geringere Werte (300g/h Flüssigkeit und 50 l/h Gas) sowohl für das Gas als auch die Flüssigkeit wurde ein längerer Betrieb ohne Stauwirkung, allerdings mit entsprechend geringem Stoffumsatz und auch unvollständigerer Umsetzung möglich.

Neben dem Reaktor 1 Typ I wurde z.B. noch ein im rechten Bereich der Figur 1 skizzierter Reaktor 1' (Typ II) getestet, in dem zwei dickere Staustufen T' zwischen den Füllkörpern angeordnet waren. Schließlich wurde das Reaktorrohr auch noch durch ein etwas längeres ausgetauscht und mit bis zu fünf Drosseln T ausgestattet und zwischen diesen Drosseln mit verschiedenen Füllkörpersäulen gefüllt - und zwar abwechselnd mit sehr feinmaschigen, siebartigen Füllkörperpackungen und gröberen Aufschüttungen statistisch verteilter Einzelfüllkörper.

Der Druck und die Geschwindigkeit der Gasphase der verschieden gefüllten Reaktoren wurden auf unterschiedlichste Weise sowohl lediglich zeitweise und wiederholt bei hohen Stoffströmen abgesenkt als auch so periodisch erhöht und erniedrigt, daß sich eine spürbare Schwingung im durchsichtigen Reaktionsrohr einstellte. So konnte der Reaktor erfolgreich bei den genannten hohen Stoffströmen kontinuierlich betrieben werden, wenn bei Einsetzen eines Flüssigphasenstaus an der oder den Drosseln der Gasdruck zeitweise immer so abgesenkt wurde, daß die gestaute Flüssigphasensäule von maximal wenigen cm Höhe abgelaufen war.

Diese Betriebsart läßt sich automatisieren, indem ein Flüssigphasenstau erfaßt wird und durch zeitweisen Druckabbau kompensiert wird, bevor der Reaktor wieder auf den hohen Gasdruck gebracht wird. Bei mehreren Drosseln tritt der Stau zu verschiedenen Zeitpunkten an den Drosseln auf und kann so durch die Ausbreitung der Druckänderung über die Säule bei einer Drossel beseitigt und bei einer anderen verhindert werden. Bei hohen Stoffströmen ist die Häufigkeit der Staubildung bereits so hoch, daß Druckänderungen ohnehin im Turnus von einigen Sekunden erforderlich sind, so daß selbst bei nicht im strengen Sinne periodischer Druckänderung ein Pulsieren der Gasphase auftritt. Es wurde bei hohen Stoffströmen mit einer Periode zwischen etwa 0,5 und 5 s gearbeitet.

Durch Kompression und Entspannung eines Druckgefäßes wurden ferner in der Reaktorsäule zeitweise oder periodische Druckerhöhungen und -absenkungen und damit Druckschwingungen erzeugt. Durch diese bevorzugt periodisch angewandten Druckhübe konnte die Reaktion weiter verbessert werden. Diese Maßnahme brachte auch dann einen deutlichen Erfolg hinsichtlich der chemischen Stoffumsetzung, wenn die Stoffströme auf die besagten niedrigen Werte gesenkt wurden und auch ohne Druckschwingung praktisch kein Flüssigstau auftrat. In der Regel wird man sich allerdings nicht freiwillig in der Höhe der Stoffströme beschränken, die gerade durch die Erfindung deutlich heraufgesetzt werden können und natürlich die Grundlage für eine erhebliche Stoffumsatzsteigerung bei gleichbleibender Reaktorgeometrie darstellen, vorausgesetzt, daß es gelingt, die hohen Stoffströme auch zur Reaktion zu bringen, was nachweislich ebenfalls durch die Erfindung gefördert wird.

Die Amplitude des erzeugten Gashubs erscheint im übrigen nicht kritisch, zumal die Einbauten stark dämpfend auf beide Phasen wirken. Der Hub darf natürlich nicht so hoch sein, daß die flüssige Phase zu weit nach oben gedrückt wird. Da dies selbstverständlich von zahlreichen Faktoren und nicht nur der Amplitude der vorgegebenen Druckschwingung abhängt, kann hier kein allgemein gültiger Grenzwert angegeben werden. Es erscheint allerdings vernünftig, die tatsächlich in der Reaktorsäule induzierten Druckhübe auf etwa ein Drittel deren Länge zu begrenzen.

## Patentansprüche

1. Verfahren zur Durchführung einer Mehrphasenreaktion in einem kontinuierlich betriebenen, nach dem Gegenstromprinzip arbeitenden Rohrreaktor, in dem Komponenten einer flüssigen, im Rohrreaktor abwärts strömenden Phase und Komponenten einer im Rohrreaktor aufwärts strömenden Gasphase im Gegenstrom der beiden Phasen zum Stoffaustausch bzw. zur Reaktion gebracht werden,
dadurch gekennzeichnet,
daß die Reaktordurchsätze der flüssigen und festen Phase auf so hohe Werte vorgegeben werden, bei denen es im Rohrreaktorinneren zu einem Flüssigphasenstau kommt oder bei denen in einem Rohrreaktor ohne Staustellen hervorrufende Einbauten die Fließfilmdicke der flüssigen Phase auf nicht mehr akzeptable Werte ansteigt, und diesen den Reaktorbetrieb störenden Phänomenen durch wiederholte zeitweise Druckänderungen der Gasphase entgegengewirkt wird, und dabei der Druck zumindest immer dann zeitweise geändert wird, wenn ein Flüssigphasenstau oder ein nicht akzeptabler Fließfilmdickenzuwachs auftritt, und die zeitweise Druckänderung so eingestellt wird, daß die gestaute Flüssigphase durch eine resultierende relative Druckabnahme unterhalb der Staustelle zumindest bis auf ein vorgegebenes Niveau abfließt oder die Fließfilmdicke durch eine resultierende Abnahme der Gasphasengeschwindigkeit auf einen gewünschten Wert abnimmt.

2. Verfahren nach Anspruch 1,
dadurch gekennzeichnet,
daß der Druck der Gasphase, vorzugsweise an der Gaszufuhr in den Rohrreaktor, periodisch so erhöht und abgesenkt wird, daß im Rohrreaktor eine Druckschwingung der Gasphase auftritt.

3. Verfahren zur Durchführung einer Mehrphasenreaktion in einem kontinuierlich betriebenen, nach dem Gegenstromprinzip arbeitenden Rohrreaktor, in dem Komponenten einer flüssigen, im Rohrreaktor abwärts strömenden Phase und Komponenten einer im Rohrreaktor aufwärts strömenden Gasphase im Gegenstrom der beiden Phasen zum Stoffaustausch bzw. zur Reaktion gebracht werden,
dadurch gekennzeichnet,
daß der Druck der Gasphase, vorzugsweise an der Gaszufuhr in den Rohrreaktor, periodisch so erhöht und abgesenkt wird, daß im Rohrreaktor eine Druckschwingung der Gasphase auftritt.

4. Verfahren nach Anspruch 2 oder 3,
dadurch gekennzeichnet,
daß die Periodenlänge und Amplitude der vorgegebenen periodischen Druckänderung wahlweise fest oder variabel und beispielsweise entsprechend einer Sinusschwingung, Sägezahnschwingung oder Rechteckschwingung vorgegeben werden.

5. Verfahren nach Anspruch 3 oder 4,
dadurch gekennzeichnet,
daß, wenn Reaktordurchsätze der flüssigen und festen Phase auf so hohe Werte vorgegeben werden, bei denen es im Rohrreaktorinneren zu einem Flüssigphasenstau kommt oder bei denen in einem Rohrreaktor ohne Staustellen hervorrufende Einbauten die Fließfilmdicke der flüssigen Phase auf nicht mehr akzeptable Werte ansteigt, die periodische Druckänderung so eingestellt wird, daß die gestaute Flüssigphase durch eine resultierende relative Druckabnahme unterhalb der Staustelle zumindest bis auf ein vorgegebenes Niveau abfließt oder die Fließfilmdicke durch eine resultierende Abnahme der Gasphasengeschwindigkeit auf einen gewünschten Wert abnimmt.

6. Verfahren nach einem der Ansprüche 2 bis 5,
dadurch gekennzeichnet,
daß eine Amplitudenmodulation der vorgegebenen Druckschwingung mit gegenüber deren Frequenz höherer Frequenz erzeugt wird.

7. Verfahren nach einem der vorhergehenden Ansprüche,
dadurch gekennzeichnet,
daß die Amplitude und zeitliche Aufeinanderfolge der Druckänderungen unter Berücksichtigung des Stoffumsatzes im Rohrreaktor vorgegeben werden, wozu beispielsweise die Austrittskonzentration einer Reaktionskomponente der Gasphase oder der Grad der erzielten Reaktionsumsetzung bestimmt werden.

8. Verfahren nach einem der vorhergehenden Ansprüche,
dadurch gekennzeichnet,
daß als flüssige Phase außer Gemischen mehrerer Flüssigkeiten, Flüssig-Flüssig-Systeme wie Emulsionen und/oder Flüssig-Fest-Systeme wie Suspensionen mit unlöslichem Feststoff oder Sole mit partiell löslichem Feststoff zugeführt werden.

9. Verfahren nach Anspruch 1 oder 3,
dadurch gekennzeichnet,
daß als Mehrphasenreaktion die Ozonierung von ungesättigten Fettsäuren, insbesondere der Ölsäure, und die oxidative Spaltung von Ozoniden unter Zufuhr der an sich bekannten Flüssigkeiten und Gase durchgeführt werden.

10. Vorrichtung zur Durchführung des Verfahrens nach einem der vorhergehenden Ansprüche,
gekennzeichnet durch einen Rohrreaktor mit einer oder mehreren durch Sensoren ansteuerbaren und/oder periodisch betreibbaren Einrichtungen zur Erzeugung von Druckänderungen der Gasphase im Rohrreaktor.

11. Vorrichtung nach Anspruch 10,
dadurch gekennzeichnet,
daß die Einrichtungen zur Druckänderung vorzugsweise an der Gaszufuhr in den Rohrreaktor eine steuerbare Membran oder einen steuerbaren Kolben umfassen.

12. Vorrichtung nach Anspruch 10 oder 11,
dadurch gekennzeichnet,
daß der Rohrreaktorinnenraum in bekannter Weise mit einschlägigen für die jeweilige Reaktion geeigneten Einbauten, Füllkörpern, statischen Mischelementen oder anderen Strukturen zur Erzielung einer vergrößerten Reaktionsoberfläche und vorzugsweise mit einer oder mehreren sich quer durch den Reaktorinnenraum erstreckenden gelochten oder siebartigen Drossel(n) ausgestattet ist, wobei der Rohrreaktorinnenraum wahlweise gleichmäßig oder gezielt inhomogen bepackt wird.

13. Vorrichtung nach Anspruch 12,
dadurch gekennzeichnet,
daß alternativ oder zusätzlich zu der Einrichtung zur Druckänderung an der Gaszufuhr eine Einrichtung zur Druckänderung an der oder den jeweiligen Drosseln vorgesehen ist.
